(19) Europäisches Patentamt
European Patent Office
Office européen des brevets

(11) EP 2 746 331 A1

(12) **EUROPEAN PATENT APPLICATION**
published in accordance with Art. 153(4) EPC

(43) Date of publication:
**25.06.2014 Bulletin 2014/26**

(21) Application number: **12835000.6**

(22) Date of filing: **06.07.2012**

(51) Int Cl.:
***C08L 15/00*** *(2006.01)*
***B60C 1/00*** *(2006.01)*
***C08C 19/22*** *(2006.01)*
***C08K 3/36*** *(2006.01)*
***C08L 71/02*** *(2006.01)*

(86) International application number:
**PCT/JP2012/067303**

(87) International publication number:
**WO 2013/046850 (04.04.2013 Gazette 2013/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2011 JP 2011209568**

(71) Applicant: **Sumitomo Rubber Industries, Ltd.**
**Kobe-shi, Hyogo 651-0072 (JP)**

(72) Inventor: **UESAKA Kenichi**
**Kobe-shi**
**Hyogo 651-0072 (JP)**

(74) Representative: **Manitz, Finsterwald & Partner GbR**
**Martin-Greif-Strasse 1**
**80336 München (DE)**

# (54) RUBBER COMPOSITION FOR TIRE, AND PNEUMATIC TIRE

(57) Provided are a rubber composition for a tire capable of improving fuel economy, wet grip performance, abrasion resistance, and processability, and a pneumatic tire including the composition. Included is a rubber composition for a tire including: a diene polymer; silica; and a compound of formula (I) below, the diene polymer being a modified diene polymer obtained by reacting components (A) and (B), the amount of the compound of formula (I) being 0.1-10 parts by mass per 100 parts by mass of the rubber component, the component (A) being an active alkali metal-terminated conjugated diene polymer obtained by polymerizing a conjugated diene monomer alone or with an aromatic vinyl monomer, in the presence of a component (C), the component (B) being a modifying agent containing a functional group, and the component (C) being a chemical species obtained by reacting an organic alkali metal compound with a compound of formula (1) below.

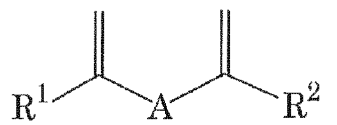
(1)

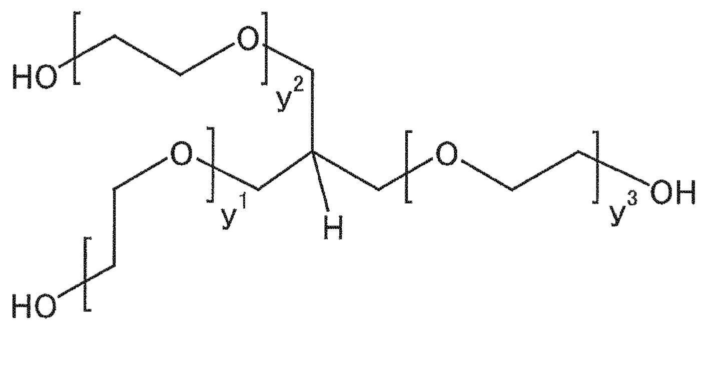
(I)

EP 2 746 331 A1

**Description**

TECHNICAL FIELD

The present invention relates to a rubber composition for a tire, and a pneumatic tire including the rubber composition.

BACKGROUND ART

Recently, tires for automobiles have been required to have a wide variety of properties, including fuel economy, wet grip performance, handling stability, abrasion resistance, and ride comfort. Thus, various measures to improve these properties have been proposed. In order to improve particularly fuel economy and wet grip performance, among these properties, silica is used as reinforcing filler. Moreover, rubber compositions for use in the preparation of the tread part, which is a tire component occupying a relatively large portion of a tire, are required to have excellent fuel economy and wet grip performance.

Reducing the amount of reinforcing filler is known as a method for improving fuel economy. This method, however, has drawbacks in that it decreases the hardness of a rubber composition and thus leads to a softer tire which may reduce vehicle steering performance (handling stability), wet grip performance and abrasion resistance.

Meanwhile, a known method for improving wet grip performance is to increase the amount of silica. However, this method has the following disadvantages: a reduction in cure rate, an increase in the viscosity of the rubber compound (reduction of processability), and deterioration of the dispersibility of silica, which result in a reduction in fuel economy and abrasion resistance. As a solution to this problem, the prior art proposes adding a polyoxyalkylene glycol such as polyethylene glycol (see Patent Literatures 1 and 2, for example); however, it also has the drawbacks of causing a reduction in tensile strength at break and also providing poor abrasion resistance.

Patent Literature 3 teaches that the use of a modified styrene-butadiene rubber, which is modified with a certain organic silicon compound containing an alkoxy group, can improve fuel economy, wet grip performance, and abrasion resistance. However, in order to achieve satisfactory levels of all of these performance properties, further improvements are needed. I addition, the modified styrene-butadiene rubber used has only one chain end modified, and modification of both chain ends or modification of two or more chain ends are not considered.

CITATION LIST

PATENT LITERATURE

Patent Literature 1: JP-A 2002-121327
Patent Literature 2: JP-A 2002-338733
Patent Literature 3: JP-A 2001-114938

SUMMARY OF INVENTION

TECHNICAL PROBLEM

The present invention aims to solve the above problems by providing a rubber composition for a tire that enables to improve fuel economy, wet grip performance, abrasion resistance, and processability, and a pneumatic tire including the rubber composition.

SOLUTION TO PROBLEM

The present invention relates to a rubber composition for a tire, including: a diene polymer; silica; and a compound represented by formula (I) below, the diene polymer being a modified diene polymer obtained by reacting a component (A) with a component (B), an amount of the compound represented by the formula (I) being 0.1 to 10 parts by mass per 100 parts by mass of a rubber component of the rubber composition, the component (A) being an active alkali metal-terminated conjugated diene polymer obtained by polymerizing a conjugated diene monomer alone or with an aromatic vinyl monomer, in the presence of a component (C), the component (B) being a modifying agent containing a functional group, and the component (C) being a chemical species obtained by reacting an organic alkali metal compound with a compound represented by the following formula (1):

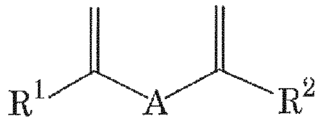

(1)

wherein $R^1$ and $R^2$ are the same as or different from each other and each represents a hydrogen atom, a branched or unbranched alkyl group, a branched or unbranched aryl group, a branched or unbranched alkoxy group, a branched or unbranched silyloxy group, a branched or unbranched acetal group, a carboxyl group, a mercapto group, or a derivative thereof; and A represents a branched or unbranched alkylene group, a branched or unbranched arylene group, or a derivative thereof;

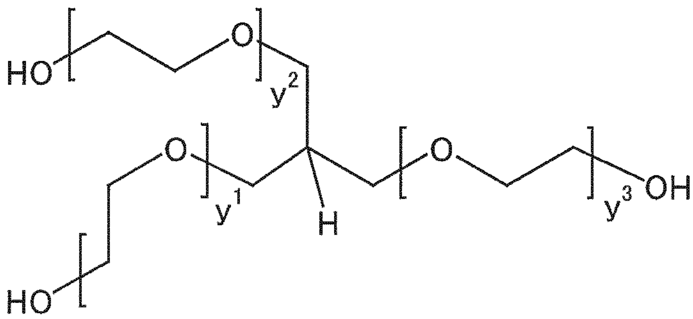

(I)

wherein $y^1$, $y^2$, and $y^3$ are the same as or different from each other and each represents an integer of 2 to 40.

The compound represented by the formula (1) is preferably a compound represented by the following formula (2).

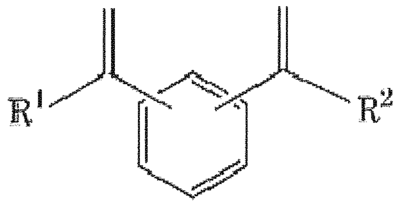

(2)

The modifying agent is preferably at least one of a compound represented by the following formula (3) and a compound represented by the following formula (4):

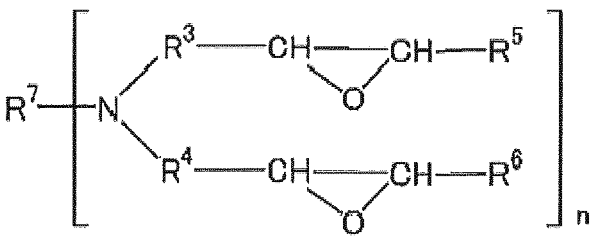

(3)

wherein $R^3$ and $R^4$ are the same as or different from each other and each represents a $C_{1-10}$ hydrocarbon group which may contain at least one selected from the group consisting of an ether group and a tertiary amine group; $R^5$ and $R^6$ are the same as or different from each other and each represents a hydrogen atom or a $C_{1-20}$ hydrocarbon group which may contain at least one selected from the group consisting of an ether group and a tertiary amine group; $R^7$ represents a $C_{1-20}$ hydrocarbon group which may contain at least one selected from the group consisting of an ether group, a tertiary amine group, an epoxy group, a carbonyl group, and a halo group; and n represents an integer of 1 to 6;

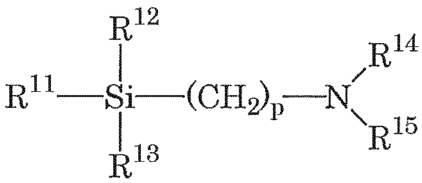 (4)

wherein $R^{11}$, $R^{12}$, and $R^{13}$ are the same as or different from each other and each represents an alkyl group, an alkoxy group, a silyloxy group, an acetal group, a carboxyl group, a mercapto group, or a derivative thereof; $R^{14}$ and $R^{15}$ are the same as or different from each other and each represents a hydrogen atom or an alkyl group; and p represents an integer.

Preferably, the same modifying agent is introduced into both chain ends of the active conjugated diene polymer.

Preferably, an amount of the diene polymer is not less than 5% by mass based on 100% by mass of the rubber component.

Preferably, the conjugated diene monomer is at least one of 1,3-butadiene and isoprene, and the aromatic vinyl monomer is styrene.

Preferably, the modified diene polymer is a modified styrene-butadiene rubber obtained by polymerizing 1,3-butadiene and styrene.

The silica preferably has a nitrogen adsorption specific surface area of 40 to 250 $m^2/g$.

The rubber composition for a tire is preferably for use as a rubber composition for a tread.

The present invention also relates to a pneumatic tire, including the rubber composition.

## ADVANTAGEOUS EFFECTS OF INVENTION

Since the rubber composition for a tire according to the present invention includes a specific diene polymer that has been modified, silica, and a specific amount of a compound represented by the above formula (I) (a polyoxyalkylene glycol having three branches), it provides improved fuel economy, wet grip performance, abrasion resistance, and processability. Therefore, the present invention provides a pneumatic tire excellent in the aforementioned properties by using the rubber composition in a tire component such as a tread.

## DESCRIPTION OF EMBODIMENTS

The rubber composition for a tire of the present invention includes a diene polymer, silica, and a specific amount of a compound represented by formula (I) below, the diene polymer being a modified diene polymer obtained by reacting a component (A) with a component (B) (hereinafter, also referred to as the modified diene polymer), the component (A) being an active alkali metal-terminated conjugated diene polymer obtained by polymerizing a conjugated diene monomer alone or with an aromatic vinyl monomer, in the presence of a component (C), the component (B) being a modifying agent containing a functional group, and the component (C) being a chemical species obtained by reacting an organic alkali metal compound with a compound represented by the following formula (1):

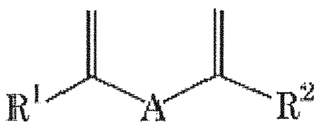 (1)

wherein $R^1$ and $R^2$ are the same as or different from each other and each represents a hydrogen atom, a branched or unbranched alkyl group, a branched or unbranched aryl group, a branched or unbranched alkoxy group, a branched or unbranched silyloxy group, a branched or unbranched acetal group, a carboxyl group, a mercapto group, or a derivative thereof; and A represents a branched or unbranched alkylene group, a branched or unbranched arylene group, or a derivative thereof;

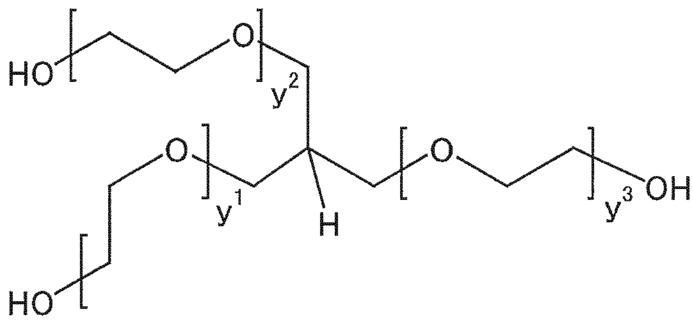

(I)

wherein $y^1$, $y^2$, and $y^3$ are the same as or different from each other and each represents an integer of 2 to 40.

Since a chemical species (C), which is obtained by reacting a compound represented by the formula (1) with an organic alkali metal compound, is used as a polymerization initiator in the polymerization reaction, both ends of the polymer chain (component (A) (active conjugated diene polymer)) formed by the polymerization reaction are living polymer ends. Thus, both chain ends of the active conjugated diene polymer (A) can be modified with a modifying agent (B). The modified diene polymer, which is obtained by modifying both chain ends of the polymer (A) with the agent (B), provides better fuel economy, wet grip performance, and abrasion resistance than the polymer having only one chain end modified, and it therefore provides a balanced improvement in these properties.

There can be an alternative method for introducing a functional group (modifying group) into both chain ends of the polymer. In this method, polymerization is carried out using a polymerization initiator containing a functional group, and a modifying agent is reacted with a polymerizing end of the polymer. The resulting polymer has the functional group derived from the polymerization initiator at one chain end and the functional group derived from the modifying agent at the other chain end. However, this functional group of the polymerization initiator performs poorly with respect to balance among fuel economy, wet grip performance, and abrasion resistance because the interaction between a functional group of a polymerization initiator and silica is generally weak. In addition, functional groups of polymerization initiators are likely to be released, and thus contribute to an increase in energy loss, leading to poor fuel economy. Furthermore, in the case of using a polymerization initiator containing a functional group with high polarity, the functional group is coordinated with a living polymer end and thus affects the reaction between the polymerizing end and a modifying agent. In this case, a desired functional group cannot be introduced into the polymerizing end.

In contrast, since the component (A) is obtained by using the component (C) as a polymerization initiator, the polymer chain grows in two directions in the polymerization reaction, that is, it has two living polymer ends, which enables introduction of any functional group of any modifying agent. Therefore, when a rubber composition contains the modified diene polymer obtained by reacting the components (A) and (B), it has an excellent balance among fuel economy, wet grip performance, and abrasion resistance.

The further use of a compound represented by the formula (I), in addition to the modified diene polymer and silica, synergistically improves fuel economy, wet grip performance, abrasion resistance, and processability, and provides a rubber composition excellent in fuel economy, wet grip performance, abrasion resistance, and processability.

In the present invention, the diene polymer is a modified diene polymer obtained by reacting a component (A) with a component (B).

The component (A) is an active alkali metal-terminated conjugated diene polymer obtained by polymerizing a conjugated diene monomer alone or with an aromatic vinyl monomer, in the presence of a component (C). It should be noted that the active conjugated diene polymer has two chain ends terminated with an alkali metal.

The component (C) is a chemical species obtained by reacting an organic alkali metal compound with a compound represented by the following formula (1).

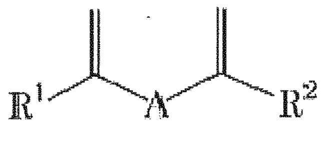

(1)

In the formula, $R^1$ and $R^2$ are the same as or different from each other and each represents a hydrogen atom, a branched or unbranched alkyl group, a branched or unbranched aryl group, a branched or unbranched alkoxy group, a branched or unbranched silyloxy group, a branched or unbranched acetal group, a carboxyl group (-COOH), a mercapto group (-SH), or a derivative thereof; and A represents a branched or unbranched alkylene group, a branched or unbranched arylene group, or a derivative thereof.

Examples of branched or unbranched alkyl groups for $R^1$ and $R^2$ include $C_{1-30}$ alkyl groups (preferably $C_{1-8}$,

more preferably $C_{1-4}$, further more preferably $C_{1-2}$ alkyl groups) such as a methyl group, an ethyl group, a n-propyl group, an isopropyl group, a n-butyl group, an iso-butyl group, a sec-butyl group, a tert-butyl group, a pentyl group, a hexyl group, a heptyl group, a 2-ethylhexyl group, an octyl group, a nonyl group, and a decyl group. The alkyl groups include alkyl groups whose hydrogen atom(s) is(are) substituted with an aryl group(s) (e.g. a phenyl group).

Examples of branched or unbranched aryl groups for $R^1$ and $R^2$ include $C_{6-18}$ aryl groups (preferably $C_{6-8}$ aryl groups) such as a phenyl group, a tolyl group, a xylyl group, a naphthyl group, and a biphenyl group. The aryl groups include aryl groups whose hydrogen atom(s) is(are) substituted with an alkyl group(s) (e.g. a methyl group).

Examples of branched or unbranched alkoxy groups for $R^1$ and $R^2$ include $C_{1-8}$ alkoxy groups (preferably $C_{1-6}$, more preferably $C_{1-4}$ alkoxy groups) such as a methoxy group, an ethoxy group, a n-propoxy group, an isopropoxy group, a n-butoxy group, and a t-butoxy group. The alkoxy groups include cycloalkoxy groups (e.g. $C_{5-8}$ cycloalkoxy groups such as a cyclohexyloxy group), and aryloxy groups (e.g. $C_{6-8}$ aryloxy groups such as a phenoxy group and a benzyloxy group).

Examples of branched or unbranched silyloxy groups for $R^1$ and $R^2$ include silyloxy groups substituted with a $C_{120}$ aliphatic or aromatic group (e.g. a trimethylsilyloxy group, a triethylsilyloxy group, a triisopropylsilyloxy group, a diethylisopropylsilyloxy group, a t-butyldimethylsilyloxy group, a t-butyldiphenylsilyloxy group, a tribenzylsilyloxy group, a triphenylsilyloxy group, and a tri-p-xylylsilyloxy group).

Examples of branched or unbranched acetal groups for $R^1$ and $R^2$ include groups represented by the formulae: - C(RR')-OR" and -O-C(RR')-OR". Examples of groups represented by the former formula include a methoxymethyl group, an ethoxymethyl group, a propoxymethyl group, a butoxymethyl group, an isopropoxymethyl group, a t-butoxymethyl group, and a neopentyloxymethyl group. Examples of groups represented by the latter formula include a methoxymethoxy group, an ethoxymethoxy group, a propoxymethoxy group, an i-propoxymethoxy group, a n-butoxymethoxy group, a t-butoxymethoxy group, a n-pentyloxymethoxy group, a n-hexyloxymethoxy group, a cyclopentyloxymethoxy group, and a cyclohexyloxymethoxy group.

Each of $R^1$ and $R^2$ is preferably a hydrogen atom, a branched or unbranched alkyl group, or a branched or unbranched aryl group. With such a structure, the balance among fuel economy, wet grip performance, and abrasion resistance can be improved. $R^1$ and $R^2$ are preferably the same because then the polymer equally grows in two directions.

Examples of branched or unbranched alkylene groups for A include $C_{1-30}$ alkylene groups (preferably $C_{1-8}$, more preferably $C_{1-4}$ alkylene groups) such as a methylene group, an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group.

Examples of derivatives of the above alkylene groups for A include alkylene groups substituted with an aryl or arylene group.

Examples of arylene groups for A include a phenylene group, a tolylene group, a xylylene group, and a naphthylene group.

Examples of derivatives of the above arylene groups for A include arylene groups substituted with an alkylene group.

A is preferably a branched or unbranched arylene group, and more preferably a phenylene group (i.e. compounds represented by the following formula (2)). With such a structure, the balance among fuel economy, wet grip performance, and abrasion resistance can be improved.

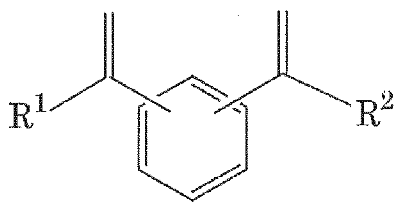 (2)

$R^1$ and $R^2$ in the formula (2) are defined as in the formula (1).

Specific examples of compounds represented by the formula (1) or (2) include 1,2-divinylbenzene, 1,3-divinylbenzene, 1,4-divinylbenzene, 1,2-diisopropenylbenzene, 1,3-diisopropenylbenzene, 1,4-diisopropenylbenzene, 1,2-diisobutenylbenzene, 1,3-diisobutenylbenzene, 1,4-diisobutenylbenzene, 1,3-phenylenebis(1-vinylbenzene), 1,4-phenylenebis(1-vinylbenzene), 1,1'-methylenebis(2-vinylbenzene), 1,1'-methylenebis(3-vinylbenzene), and 1,1'-methylenebis(4-vinylbenzene). These may be used alone, or two or more of these may be used in combination. Preferred among these are 1,3-divinylbenzene, 1,3-diisopropenylbenzene, and 1,3-phenylenebis(1-vinylbenzene).

Examples of organic alkali metal compounds that can be used in the present invention include hydrocarbon compounds containing an alkali metal such as lithium, sodium, potassium, rubidium, or cesium. Preferred among these

are lithium- or sodium-containing compounds having 2 to 20 carbon atoms. Specific examples thereof include ethyllithium, n-propyllithium, iso-propyllithium, n-butyllithium, sec-butyllithium, t-octyllithium, n-decyllithium, phenyllithium, 2-naphthyllithium, 2-butylphenyllithium, 4-phenyl-butyllithium, cyclohexyllithium, 4-cyclopentyllithium, and 1,4-dilithio-butene-2. Preferred among these are n-butyllithium and sec-butyllithium because they enable the reaction to proceed rapidly to provide a polymer with a narrow molecular weight distribution.

The method for preparing the component (C) is not particularly limited, as long as the compound represented by the formula (1) and the organic alkali metal compound are brought into contact. Specifically, the component (C) may be prepared by separately dissolving a compound represented by the formula (1) and an organic alkali metal compound in an organic solvent that is inert to the reaction (e.g. a hydrocarbon solvent); and adding dropwise the solution of the organic alkali metal compound to the solution of the compound represented by the formula (1) with stirring. The reaction temperature in preparing the component (C) is preferably 40°C to 60°C.

The hydrocarbon solvent refers to a solvent that does not deactivate the organic alkali metal compound (alkali metal catalyst), and may suitably be selected from aliphatic hydrocarbons, aromatic hydrocarbons, and alicyclic hydrocarbons, particularly those having 2 to 12 carbon atoms, such as propane, n-butane, iso-butane, n-pentane, iso-pentane, n-hexane, cyclohexane, propene, 1-butene, iso-butene, trans-2-butene, cis-2-butene, 1-pentene, 2-pentene, 1-hexene, 2-hexene, benzene, toluene, xylene, and ethylbenzene. Two or more of these solvents may be used in admixture.

Examples of conjugated diene monomers that can be used in the present invention include 1,3-butadiene, isoprene, 1,3-pentadiene (piperylene), 2,3-dimethyl-1,3-butadiene, and 1,3-hexadiene. Considering the physical properties of the resulting polymer and the availability for industrial purposes, 1,3-butadiene and isoprene are preferred among these.

Examples of aromatic vinyl monomers that can be used in the present invention include styrene, $\alpha$-methylstyrene, vinyltoluene, vinylnaphthalene, divinylbenzene, trivinylbenzene, and divinylnaphthalene. Considering the physical properties of the resulting polymer and the availability for industrial purposes, styrene is preferred among these.

The monomer may be the conjugated diene monomer alone or a combination of the conjugated diene monomer and the aromatic vinyl monomer. When the conjugated diene monomer and the aromatic vinyl monomer are used in combination, the ratio of these monomers ([conjugated diene monomer]/[aromatic vinyl monomer]) is preferably 50/50 to 90/10, and more preferably 55/45 to 85/15 on a mass basis. If the ratio is less than 50/50, the polymerized rubber may be insoluble in a hydrocarbon solvent, which may make it impossible to cause uniform polymerization. Conversely, if the ratio is more than 90/10, the strength of the polymerized rubber may be lowered.

The modified diene polymer is preferably one obtained by copolymerizing the conjugated diene monomer and the aromatic vinyl monomer, and particularly preferably one obtained by copolymerizing 1,3-butadiene and styrene (i.e. modified styrene-butadiene rubber). The use of such a modified copolymer improves fuel economy, wet grip performance, and abrasion resistance. Further, the combined use with silica and the compound represented by the formula (I) synergistically improves fuel economy, wet grip performance, and abrasion resistance.

The method for preparing the component (A) is not particularly limited, provided that the component (C) is used as a polymerization initiator. Conventionally known methods may be employed. Specifically, a conjugated diene monomer, or a conjugated diene monomer and an aromatic vinyl monomer is/are polymerized using a component (C) as a polymerization initiator in an organic solvent that is inert to the reaction (e.g. a hydrocarbon solvent), optionally in presence of a randomizer. Then, the target active conjugated diene polymer with two chain ends terminated with an alkali metal is formed.

The hydrocarbon solvent may suitably be as mentioned for the preparation of the component (C).

The randomizer refers to a compound having the function of controlling the microstructure of a conjugated diene portion of a polymer, for example, increase of 1,2-butadiene units or 3,4-isoprene units, or the function of controlling the compositional distribution of monomer units in a polymer, for example, randomization of butadiene units and styrene units in a butadiene-styrene copolymer.

The randomizer may be any compound. Considering the availability for industrial purposes, particularly ether compounds and tertiary amines are preferred. Examples of ether compounds include cyclic ethers such as tetrahydrofuran, tetrahydropyran, and 1,4-dioxane; aliphatic monoethers such as diethyl ether and dibutyl ether; aliphatic diethers such as ethylene glycol dimethyl ether, ethylene glycol diethyl ether, ethylene glycol dibutyl ether, diethylene glycol diethyl ether, and diethylene glycol dibutyl ether; and aromatic ethers such as diphenyl ether and anisole. Examples of tertiary amines include triethylamine, tripropylamine, and tributylamine, as well as N,N,N',N'-tetramethylethylenediamine, N,N-diethylaniline, pyridine, and quinoline.

The component (B) is a modifying agent containing a functional group. The component (B) is preferably a compound containing a functional group that contains at least one atom selected from the group consisting of nitrogen, oxygen, and silicon.

Examples of functional groups include an amino group, an amide group, an alkoxysilyl group, an isocyanate group, an imino group, an imidazole group, an urea group, an ether group (in particular, an epoxy group), a carbonyl group, a carboxyl group, a hydroxyl group, a nitrile group, a pyridyl group, and a diglycidylamino group. These functional

groups may be substituted. Preferred among these are an amino group, an alkoxysilyl group, an ether group (in particular, an epoxy group), a carbonyl group, a hydroxyl group, a carboxyl group, and a diglycidylamino group because they are highly reactive with silica.

The component (B) is preferably a compound represented by formula (3) below. It is preferable that a single component (B) be used (or in other words, the same modifying agent be introduced into both chain ends of the component (A)). When a single component (B) is used, the same functional group can be introduced into both chain ends of the component (A), and thus the polymer can have uniform chain ends which make the reactivity of the polymer with silica stable.

The compound represented by the formula (3) is a polyfunctional compound having two or more epoxy groups. These epoxy groups will react with the active chain ends of the active conjugated diene polymer (A). As a result of the reaction, hydroxyl groups can be introduced into the polymer chain. Moreover, since the polyfunctional compound has two or more epoxy groups per molecule, one molecule of the polyfunctional compound will react with active chain ends of multiple molecules of the active conjugated diene polymer (A). As a result of the reaction, two or more polymer chains can be coupled. Thus, the resulting modified diene polymer may include ones having three or more sites (e.g. chain ends) modified with the polyfunctional compound. The balance among fuel economy, wet grip performance, and abrasion resistance can be more improved as the number of modified sites (e.g. chain ends) of the modified diene polymer increases.

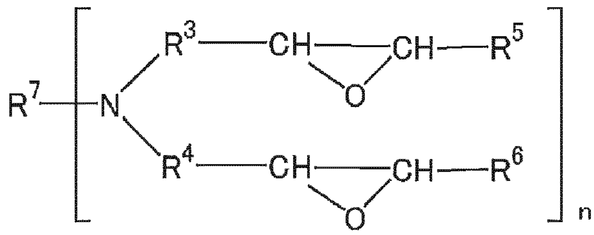

(3)

(In the formula (3), $R^3$ and $R^4$ are the same as or different from each other and each represents a $C_{1-10}$ hydrocarbon group which may contain at least one selected from the group consisting of an ether group and a tertiary amine group; $R^5$ and $R^6$ are the same as or different from each other and each represents a hydrogen atom or a $C_{1-20}$ hydrocarbon group which may contain at least one selected from the group consisting of an ether group and a tertiary amine group; $R^7$ represents a $C_{1-20}$ hydrocarbon group which may contain at least one selected from the group consisting of an ether group, a tertiary amine group, an epoxy group, a carbonyl group, and a halo group; and n represents an integer of 1 to 6.)

Each of $R^3$ and $R^4$ is preferably a $C_{1-10}$ (preferably $C_{13}$) alkylene group. Each of $R^5$ and $R^6$ is preferably a hydrogen atom. $R^7$ may be a $C_{3-20}$ hydrocarbon group (preferably a $C_{6-10}$, more preferably $C_8$ hydrocarbon group), and is preferably a cycloalkyl group, a cycloalkylene group, or a cycloalkanetriyl group, such as those represented by the following formulae. It is more preferably a cycloalkylene group.

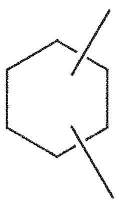 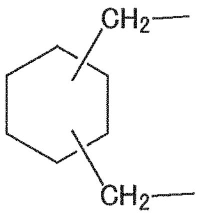 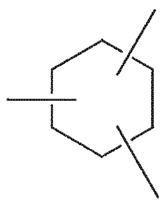 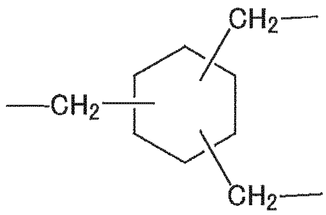

Preferably, n is 2 or 3. Suitable examples of the compound represented by the formula (3) include tetraglycidyl metaxylenediamine, tetraglycidyl aminodiphenylmethane, tetraglycidyl-p-phenylenediamine, diglycidyl aminomethylcyclohexane, and tetraglycidyl-1,3-bisaminomethylcyclohexane.

The component (B) is also preferably a compound represented by the following formula (4) (a compound disclosed in JP 2010-111753 A).

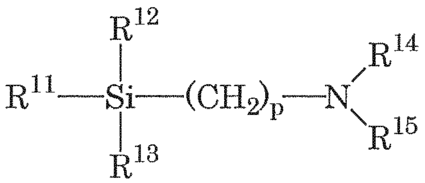 (4)

(In the formula (4), $R^{11}$, $R^{12}$, and $R^{13}$ are the same as or different from each other and each represents an alkyl group, an alkoxy group (preferably having 1 to 8, more preferably 1 to 6, and still more preferably 1 to 4 carbon atoms), a silyloxy group, an acetal group, a carboxyl group (-COOH), a mercapto group (-SH), or a derivative thereof; $R^{14}$ and $R^{15}$ are the same as or different from each other and each represents a hydrogen atom or an alkyl group (preferably having 1 to 4 carbon atoms); and p represents an integer (preferably of 1 to 5, more preferably 2 to 4, and still more preferably 3).

Each of $R^{11}$, $R^{12}$, and $R^{13}$ is preferably an alkoxy group, and each $R^{14}$ and $R^{15}$ is preferably an alkyl group.

Specific examples of the compound represented by the formula (4) include 3-aminopropyldimethylmethoxysilane, 3-aminopropylmethyldimethoxysilane, 2-dimethylaminoethyltrimethoxysilane, 3-diethylaminopropyltrimethoxysilane, and 3-dimethylaminopropyltrimethoxysilane. These may be used alone, or two or more of these may be used in combination. As described above, it is preferable that a single component (B) (compound represented by the formula (4)) be used (or in other words, the same modifying agent be introduced into both chain ends of the component (A)).

In the present invention, the diene polymer (modified diene polymer) can be formed by reacting the component (A) with the component (B) in an organic solvent that is inert to the reaction, such as a hydrocarbon solvent.

The hydrocarbon solvent may suitably be as mentioned for the preparation of the component (C).

The amount of the modifying agent (B) containing a functional group is preferably 0.1 to 10 mol, and more preferably 0.5 to 2 mol, per mole of the organic alkali metal compound. The use of less than 0.1 mol of the modifying agent (B) provides little improvement in fuel economy. Conversely, if more than 10 mol of the modifying agent (B) is used, a portion thereof remains in the polymerization solvent, and there are therefore some economic disadvantages in that, for example, a step for removing the remaining portion from the solvent is necessary to recycle the solvent.

Since the reaction between the components (A) and (B) rapidly proceeds, the reaction temperature and the reaction time can be selected from wide ranges. Generally, the reaction temperature ranges from room temperature (25°C) to 80°C and the reaction time ranges from few seconds to several hours. Any method may be employed for the reaction as long as the components (A) and (B) are brought into contact. In a non-limiting preferred method for the reaction, for example, the diene polymer is formed by polymerization using the component (C), and a predetermined amount of the component (B) is then added to the polymer solution.

A coupling agent represented by the general formula: $R_aMX_b$ may be added before or after the reaction between the components (A) and (B) from the viewpoint of kneadability (in the formula, R represents an alkyl group, an alkenyl group, a cycloalkenyl group, or an aromatic hydrocarbon group; M represents a silicon or tin atom; X represents a halogen atom; "a" represents an integer of 0 to 2; and b represents an integer of 2 to 4). The amount of the coupling agent is preferably 0.03 to 0.4 mol, and more preferably 0.05 to 0.3 mol, per 1 mol of the organic alkali metal compound (alkali metal catalyst) used. The use of less than 0.03 mol of the coupling agent provides little improvement in processability. Conversely, the use of more than 0.4 mol of the coupling agent reduces the number of alkali metal chain ends that can react with the modifying agent containing a functional group, and thus reduces the improvement in fuel economy.

After completion of the reaction, the modified diene polymer can be solidified by a solidifying technique used in the production of rubber by common solution polymerization, such as the addition of a coagulant or steam coagulation, and then can be separated from the reaction solvent. The solidifying temperature is not limited at all.

The solidified mass separated from the reaction solvent can be dried to provide the diene polymer (modified diene polymer). For drying the solidified mass, driers commonly used in the production of synthetic rubber, such as a band drier, an extrusion drier, or the like may be used. The drying temperature is not limited at all.

The diene polymer preferably has a Mooney viscosity ($ML_{1+4}$) (100°C) of 10 to 200, more preferably 20 to 150. The upper limit thereof is further more preferably not more than 100, and particularly preferably not more than 75. If the Mooney viscosity is less than 10, the vulcanizate may have reduced mechanical properties (e.g. reduced tensile strength). Conversely, if the viscosity is more than 200, the diene polymer, when combined with other rubbers, may have poor compatibility, thereby deteriorating processability. Further, the resulting vulcanized rubber composition may have reduced mechanical properties. The Mooney viscosity can be determined by the method described in examples.

The vinyl content in the conjugated diene portion of the diene polymer is not particularly limited, and is preferably 10 to 70 mol%, and more preferably 15 to 60 mol%. The lower limit thereof is further more preferably not less than 35 mol%, particularly preferably not less than 40 mol%, and most preferably not less than 50 mol%. If the vinyl content is less than 10 mol%, the glass transition temperature of the polymer may be so low that when the polymer is used for tires, grip performance (wet grip performance) can be poor. Conversely, if the vinyl content is more than 70 mol%, the

glass transition temperature of the polymer may be increased, possibly resulting in poor impact resilience.

The vinyl content (1,2-butadiene unit content) can be determined by infrared absorption spectrometry.

The amount of the diene polymer based on 100% by mass of the rubber component is preferably not less than 5% by mass, more preferably not less than 10% by mass, further more preferably not less than 40% by mass, and particularly preferably not less than 60% by mass. If the amount is less than 5% by mass, the fuel economy, wet grip performance, and abrasion resistance may not be at sufficient levels. The amount of the diene polymer may be 100% by mass, and is preferably not more than 90% by mass. If the amount is more than 90% by mass, the fuel economy and abrasion resistance may be lowered.

The rubber composition of the present invention may contain other rubbers in combination with the diene polymer in the rubber component. Examples of other rubbers include natural rubber (NR), butadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). These rubbers may be used alone, or two or more of these may be used in combination. Preferred among these are NR and BR because they improve rubber strength, and provide high resistance to abrasion and to crack growth, and good fuel economy.

The NR is not particularly limited, and examples thereof include those commonly used in the tire industry, such as SIR20, RSS#3, and TSR20.

When NR is used in the rubber composition of the present invention, the amount of NR based on 100% by mass of the rubber component is preferably not less than 5% by mass, and more preferably not less than 10% by mass. If the amount is less than 5% by mass, the rubber strength may be insufficient, and the abrasion resistance and also fuel economy may be lowered. The amount of NR is preferably not more than 40% by mass, and more preferably not more than 30% by mass. If the amount is more than 40% by mass, grip performance (wet grip performance) may be lowered.

The BR is not particularly limited, and examples thereof include BRs with a high cis content, such as BR1220 and BR1250H (ZEON Corporation), and BR130B and BR150B (Ube Industries, Ltd.); and syndiotactic polybutadiene crystal-containing BRs such as VCR412 and VCR617 (Ube Industries, Ltd.). BRs with a cis content of not less than 95% by mass are preferred among these because they have low glass transition temperatures (Tg) and thus provide good abrasion resistance.

When BR is used in the rubber composition of the present invention, the amount of BR based on 100% by mass of the rubber component is preferably not less than 5% by mass, and more preferably not less than 10% by mass. If the amount is less than 5% by mass, crack growth resistance, abrasion resistance, and fuel economy may be decreased. The amount of BR is preferably not more than 40% by mass, and more preferably not more than 30% by mass. If the amount is more than 40% by mass, grip performance (wet grip performance) may be decreased.

In the present invention, silica is used. The use of silica together with the diene polymer and the compound represented by the formula (I) synergistically improves fuel economy, wet grip performance, and abrasion resistance. The silica is not particularly limited, and examples thereof include dry silica (silicic anhydride) and wet silica (hydrous silica). Wet silica is preferred because it has more silanol groups.

The silica preferably has a nitrogen adsorption specific surface area ($N_2SA$) of not less than 40 $m^2/g$, more preferably not less than 50 $m^2/g$, further more preferably not less than 100 $m^2/g$, and particularly preferably not less than 150 $m^2/g$. If the $N_2SA$ is less than 40 $m^2/g$, tensile strength at break and abrasion resistance tend to be lowered. The $N_2SA$ of silica is preferably not more than 250 $m^2/g$, more preferably not more than 220 $m^2/g$, and further more preferably not more than 200 $m^2/g$. If the $N_2SA$ is more than 250 $m^2/g$, fuel economy and processability tend to be lowered.

The nitrogen adsorption specific surface area of silica is determined by the BET method in accordance with ASTM D3037-81.

The amount of silica per 100 parts by mass of the rubber component is preferably not less than 10 parts by mass, more preferably not less than 20 parts by mass, further more preferably not less than 30 parts by mass, particularly preferably not less than 50 parts by mass, and most preferably not less than 60 parts by mass. If the amount is less than 10 parts by mass, the silica used tends not to exert a sufficient effect. The amount of silica is preferably not more than 150 parts by mass, more preferably not more than 120 parts by mass, and further more preferably not more than 100 parts by mass. If the amount is more than 150 parts by mass, the silica is less likely to disperse into the rubber composition, and thus the rubber composition tends to have deteriorated processability and abrasion resistance.

In the present invention, the use of silica together with the diene polymer and the compound represented by the formula (I) enables good dispersibility of silica even when the rubber compound is highly filled with silica, and enables to suppress a reduction in cure rate and to reduce the viscosity of the kneaded rubber compound, thus providing a balanced improvement in fuel economy, wet grip performance, abrasion resistance, and processability.

In the present invention, a silane coupling agent is preferably used with silica. The silane coupling agent may be any silane coupling agent conventionally used in combination with silica in the rubber industry, and examples thereof include sulfide silane coupling agents such as bis(3-triethoxysilylpropyl)tetrasulfide and bis(3-triethoxysilylpropyl)disulfide; mercapto silane coupling agents such as 3-mercaptopropyltrimethoxysilane; vinyl silane coupling agents such

as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. These may be used alone, or two or more of these may be used in combination. Sulfide silane coupling agents are preferred among these, and bis(3-triethoxysilylpropyl)disulfide is more preferred.

The amount of silane coupling agent per 100 parts by mass of silica is preferably not less than 3 parts by mass, and more preferably not less than 6 parts by mass. If the amount is less than 3 parts by mass, abrasion resistance and tensile performance at break tend to be deteriorated. The amount of silane coupling agent is preferably not more than 20 parts by mass, and more preferably not more than 12 parts by mass. If the amount is more than 20 parts by mass, an effect commensurate with the increase in cost tends not to be obtained.

The present invention includes a compound represented by formula (I) below. This enables silica to disperse well even when the rubber compound is highly filled with silica, and enables to suppress a reduction in cure rate and to reduce the viscosity of the kneaded rubber compound, thus providing a balanced improvement in fuel economy, wet grip performance, abrasion resistance, and processability.

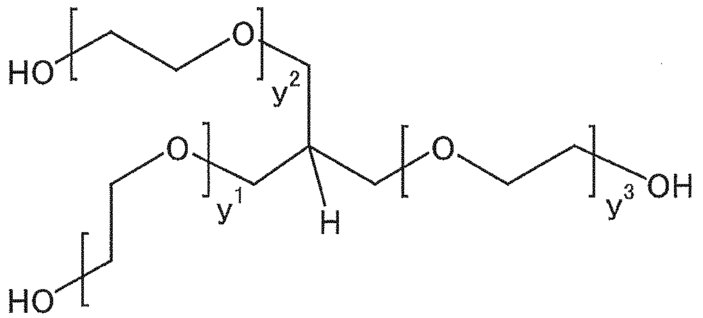

- (I)

(In the formula (I), $y^1$, $y^2$, and $y^3$ are the same as or different from each other and each represents an integer of 2 to 40.)

Each of $y^1$, $y^2$, and $y^3$ is not less than 2, preferably not less than 15, and more preferably not less than 20. If $y^1$, $y^2$, or $y^3$ is less than 2, bleeding tends to easily occur. Each of $y^1$, $y^2$, and $y^3$ is also not more than 40, preferably not more than 35, and more preferably not more than 30. If $y^1$, $y^2$, or $y^3$ is more than 40, the rubber composition tends to be too hard.

The symbols $y^1$, $y^2$, and $y^3$ are preferably the same integer because then silica disperses well and thus a balanced improvement in fuel economy, wet grip performance, abrasion resistance, and processability can be achieved.

The compound represented by the formula (I) is a polyoxyalkylene glycol having three branches, and examples of such polyoxyalkylene glycols include polyethylene glycol, polypropylene glycol, and polybutylene glycol. Polyethylene glycol is preferred among these, in terms of achieving the effect of the present invention well.

The amount of the compound represented by the formula (I) per 100 parts by mass of the rubber component is not less than 0.1 parts by mass, preferably not less than 0.8 parts by mass, and more preferably not less than 2.5 parts by mass. If the amount is less than 0.1 parts by mass, the compound represented by the formula (I) used may not exert a sufficient effect. The amount of the compound represented by the formula (I) is not more than 10 parts by mass, preferably not more than 8 parts by mass, and more preferably not more than 5 parts by mass. If the amount is more than 10 parts by mass, blooming is likely to occur, and the fuel economy, wet grip performance, and abrasion resistance also tend to decrease.

The rubber composition of the present invention preferably contains carbon black. This provides good reinforcement and further improves abrasion resistance.

Examples of carbon black include, but not limited to, GPF, HAF, ISAF, and SAF.

The carbon black preferably has a nitrogen adsorption specific surface area ($N_2SA$) of not less than 30 $m^2/g$, more preferably not less than 70 $m^2/g$, and still more preferably not less than 100 $m^2/g$. If the $N_2SA$ is less than 30 $m^2/g$, sufficient reinforcement tends not to be provided. The $N_2SA$ of carbon black is preferably not more than 250 $m^2/g$, more preferably not more than 150 $m^2/g$, and still more preferably not more than 125 $m^2/g$. If the $N_2SA$ is more than 250 $m^2/g$, the viscosity of the unvulcanized rubber composition tends to be very high, thereby resulting in deteriorated processability. Additionally, fuel economy also tends to be deteriorated.

The nitrogen adsorption specific surface area of carbon black is determined in conformity with JIS K6217-2:2001.

The carbon black preferably has a dibutyl phthalate (DBP) oil absorption of not less than 70 ml/100 g, more preferably not less than 90 ml/100 g. The DBP oil absorption of carbon black is preferably not more than 160 ml/100 g, and more preferably not more than 125 ml/100 g. A DBP oil absorption within such a range as mentioned above allows

a balanced improvement in fuel economy, wet grip performance, and abrasion resistance.

The DBP oil absorption of carbon black is determined in accordance with JIS K6217-4:2001.

In cases where the rubber composition of the present invention contains carbon black, the amount of carbon black per 100 parts by mass of the rubber component is preferably not less than 5 parts by mass, and more preferably not less than 8 parts by mass. If the amount is less than 5 parts by mass, the carbon black used may not exert a sufficient effect. The amount of carbon black is preferably not more than 60 parts by mass, more preferably not more than 20 parts by mass, and further more preferably not more than 15 parts by mass. If the amount is more than 60 parts by mass, fuel economy tends to be deteriorated.

The silica content based on 100% by mass in total of silica and carbon black is preferably not less than 60% by mass, and more preferably not less than 80% by mass, whereas it is preferably not more than 98% by mass, and more preferably not more than 95% by mass. A silica content within such a range as mentioned above can lead to a balanced improvement in fuel economy, wet grip performance, and abrasion resistance at high levels.

In the present invention, a vulcanization accelerator may be used. Examples of vulcanization accelerators that can be used include: sulfenamide vulcanization accelerators, thiazole vulcanization accelerators, thiuram vulcanization accelerators, thiourea vulcanization accelerators, guanidine vulcanization accelerators, dithiocarbamate vulcanization accelerators, aldehyde-amine or aldehyde-ammonia vulcanization accelerators, imidazoline vulcanization accelerators, and xanthate vulcanization accelerators. Sulfenamide vulcanization accelerators are preferred among these because they provide a high initial cure rate.

Examples of sulfenamide vulcanization accelerators include N-tert-butyl-2-benzothiazolylsulfenamide (TBBS), N-cyclohexyl-2-benzothiazolylsulfenamide (CBS), and N,N'-dicyclohexyl-2-benzothiazolylsulfenamide (DZ). TBBS and CBS are preferred among these.

In addition to the aforementioned ingredients, the rubber composition of the present invention may optionally contain compounding ingredients commonly used in the preparation of rubber compositions. Examples thereof include reinforcing fillers such as clay, zinc oxide, stearic acid, various antioxidants, oils such as aromatic oils, waxes, vulcanizing agents such as sulfur, and vulcanization accelerators.

A commonly known method can be employed to prepare the rubber composition of the present invention; for example, the rubber composition can be prepared by, for example, mixing and kneading ingredients mentioned above with a rubber kneader such as an open roll mill or a Banbury mixer, and then vulcanizing the mixture.

The rubber composition of the present invention can be suitably used for various components (in particular, a tread) of a tire.

The pneumatic tire of the present invention can be produced by a conventional method using the above-mentioned rubber composition. Specifically, an unvulcanized rubber composition with optionally added additives is extruded and processed into the shape of a tire component (in particular, a tread), and then formed in a usual manner on a tire building machine and assembled with other tire components to build an unvulcanized tire. Then, the unvulcanized tire is heated and pressed in a vulcanizer to provide the tire.

The tire of the present invention can be suitably used, for example, for passenger vehicles, busses, and trucks.

EXAMPLES

The present invention will be more specifically described with reference to examples, but the present invention is not limited to these examples.

In the following, the chemical agents used in production examples are listed. The chemical agents were purified by commonly used methods as necessary.

Cyclohexane: product of Tokyo Chemical Industry Co., Ltd. (purity: 99.5% or higher)
Styrene: product of Tokyo Chemical Industry Co., Ltd. (purity: 99% or higher)
1,3-Butadiene: product of Tokyo Chemical Industry Co., Ltd.
N,N,N',N'-Tetramethylethylenediamine: product of Wako Pure Chemical Industries, Ltd.
n-Butyllithium: product of Wako Pure Chemical Industries, Ltd.
Hexane solution of 1,3-divinylbenzene (1.6 M): product of Tokyo Chemical Industry Co., Ltd.
Isopropanol: product of Wako Pure Chemical Industries, Ltd.
2,6-tert-Butyl-p-cresol: product of Wako Pure Chemical Industries, Ltd.
Tetraglycidyl-1,3-bisaminomethylcyclohexane: product of Wako Pure Chemical Industries, Ltd. (compound represented by the following formula (modifying agent))

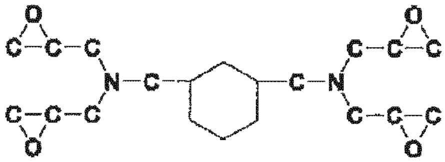

Methanol: product of Kanto Chemical Co., Inc.
Dimethylaminopropyltrimethoxysilane: product of AZmax

Production Example 1

(Preparation of polymerization initiator)

To a 100 ml pressure-resistant vessel in which the air was sufficiently replaced with nitrogen was added 10 ml of a hexane solution of 1,3-divinylbenzene (1.6 M). To the mixture, 20 ml of a hexane solution of n-butyllithium (1.6 M) was dropwise added at 0°C and the resulting mixture was stirred for one hour. Thus, a polymerization initiator solution was prepared.

Production Example 2

(Preparation of diene polymer 1 (modified diene polymer))

To a 1000 ml pressure-resistant vessel in which the air was sufficiently replaced with nitrogen were added 600 ml of cyclohexane, 0.12 mol of styrene, 0.8 mol of 1,3-butadiene, and 0.7 mmol of N,N,N',N'-tetramethylethylenediamine. To the mixture, 1.5 ml of the polymerization initiator solution prepared in Production Example 1 was further added, and the resulting mixture was stirred at 40°C. After three hours, 1.0 mmol of tetraglycidyl-1,3-bisaminomethylcyclohexane (a modifying agent) was added thereto and the mixture was then stirred. After one hour, 3 ml of isopropanol was added to terminate the polymerization. After adding 1 g of 2,6-tert-butyl-p-cresol to the reaction solution, the solution was subjected to reprecipitation with methanol, and the precipitate was heated and dried to give a diene polymer 1 (modified diene polymer having two or more modified sites (e.g. modified chain ends)).

Production Example 3

(Preparation of diene polymer 2 (modified diene polymer))

To a 1000 ml pressure-resistant vessel in which the air was sufficiently replaced with nitrogen were added 600 ml of cyclohexane, 0.12 mol of styrene, 0.8 mol of 1,3-butadiene, and 0.7 mmol of N,N,N',N'-tetramethylethylenediamine. To the mixture, 1.5 ml of the polymerization initiator solution prepared in Production Example 1 was further added, and the resulting mixture was stirred at 40°C. After three hours, 1.0 mmol of dimethylaminopropyltrimethoxysilane (a modifying agent) was added thereto and the mixture was then stirred. After one hour, 3 ml of isopropanol was added to terminate the polymerization. After adding 1 g of 2,6-tert-butyl-p-cresol to the reaction solution, the solution was subjected to reprecipitation with methanol, and the precipitate was heated and dried to give a diene polymer 2 (modified diene polymer having two or more modified sites (e.g. modified chain ends)).

The thus prepared diene polymers 1 and 2 were evaluated as follows.

(Mooney viscosity)

The Mooney viscosity ($ML_{1+4}$/100°C) of each diene polymer was determined in accordance with JIS K 6300-1 "Rubber, unvulcanized - Physical property - Part 1: Determination of Mooney viscosity and pre-vulcanization characteristics with Mooney viscometer". Here, a Mooney viscosity tester was preheated for one minute up to 100°C and a small rotor was rotated under this temperature condition. After four-minute rotation, the Mooney viscosity was measured. The measured values were rounded to the nearest whole number. As a result of the determination, the diene polymers 1 and 2 were found to have a Mooney viscosity of 60.

(Vinyl content)

The vinyl content of each diene polymer was determined by infrared absorption spectrometry. The diene polymers 1 and 2 were found to have a vinyl content of 57 mol%.

In the following, the chemical agents used in examples and comparative examples are listed.

Diene polymers 1 and 2: diene polymers 1 and 2 prepared in Production Examples 2 and 3
SBR: E15 (S-SBR coupled with an epoxy group-containing compound (tetraglycidyl-1,3-bisaminomethylcyclohexane), styrene unit content: 23% by mass, vinyl unit content: 64% by mass, end group: OH (one-end-modified SBR), Asahi Kasei Chemicals Corp.)
BR: Nipol BR1220 (cis content: 97% by mass, Zeon Corp.)
NR: RSS#3
Carbon black: Diablack N220 (N220, $N_2SA$: 114 $m^2/g$, DBP oil absorption: 114 ml/100 g, Mitsubishi Chemical Corp.)
Silica: Ultrasil VN3 ($N_2SA$: 175 $m^2/g$, Evonik Degussa)
Silane coupling agent: Si75 (bis(3-triethoxysilylpropyl)disulfide, Evonik Degussa)
Zinc oxide: Zinc oxide #1 (Mitsui Mining & Smelting Co., Ltd.)
Stearic acid: stearic acid "Tsubaki" (NOF Corp.)
Aromatic oil: Process X-140 (JX Nippon Oil & Energy Corporation)
Antioxidant: Antigene 6C (N-(1,3-dimethylbutyl)-N'-phenyl-p-phenylenediamine, Sumitomo Chemical Co., Ltd.)
Wax: SUNNOC N (Ouchi Shinko Chemical Industrial Co., Ltd.)
Sulfur: sulfur powder (Karuizawa Iou K.K.)
Compound (A): Vulcuren VP KA9202 (polyethylene glycol having three branches; the above formula (I) with $y^1$=25, $y^2$=25, and $y^3$=25; LANXESS)
Vulcanization accelerator (1): Nocceler CZ (N-cyclohexyl-2-benzothiazolylsulfenamide, Ouchi Shinko Chemical Industrial Co., Ltd.)
Vulcanization accelerator (2): Nocceler D (N,N'-diphenylguanidine, Ouchi Shinko Chemical Industrial Co., Ltd.)

Examples and Comparative Examples

The chemical agents in formulation amounts shown in Table 1, except the sulfur and vulcanization accelerators, were mixed and kneaded with a Banbury mixer at 165°C for four minutes to provide a kneaded mixture. To the kneaded mixture were added the sulfur and vulcanization accelerators and then the mixture was kneaded with an open roll mill at 80°C for four minutes to provide an unvulcanized rubber composition. Then, the unvulcanized rubber composition was formed into a tread shape, assembled with other tire components, and vulcanized at 150°C for 35 minutes at 25 kgf to prepare a test tire (tire size: 195/65R15).

The test tires thus prepared were evaluated as follows. The results are shown in Table 1. Here, Comparative Example 1 is defined as the reference comparative example.

(Fuel economy)

Using a rolling resistance tester, the rolling resistance of each test tire was determined by running the tire with a rim of 15 × 6JJ at an internal pressure of 230 kPa, a load of 3.43 kN, and a speed of 80 km/h. The result of each tire is expressed as an index relative to a value of 100 representing the rolling resistance of the reference comparative example. A higher index indicates a higher level of fuel economy. An index of not less than 105 corresponds to good fuel economy.

(Wet grip performance)

The wet grip performance was evaluated based on the braking performance determined by an Anti-Lock Brake System (ABS) evaluation test. Specifically, each set of test tires was mounted on a 1800-cc class passenger vehicle equipped with an ABS, and the vehicle was driven on an asphalt road (condition of road surface: wet, skid number: approximately 50). Then, the brake was stepped on when the speed was 100 km/h, and the distance traveled until the vehicle stopped (stopping distance) was measured. The stopping distance of each formulation is expressed as a wet grip performance index relative to that of the reference comparative example (=100), using the following equation. A higher wet grip performance index indicates a higher level of the braking performance on a wet road, that is, a higher level of wet grip performance. An index of not less than 105 corresponds to good wet grip performance.

$$(\text{Wet grip performance index}) = (\text{Stopping distance of reference comparative example}) / (\text{Stopping distance of each formulation}) \times 100$$

(Abrasion resistance)

Each set of test tires was mounted on a 1800-cc class passenger vehicle equipped with an ABS, and the groove depth loss was measured after the vehicle had run 30000 km in a city area. Then, the mileage at which the groove depth was reduced by 1 mm was calculated. The groove depth loss result of each formulation is expressed as an abrasion resistance index relative to that of the reference comparative example (=100), using the following equation. A higher abrasion resistance index indicates a higher level of abrasion resistance. An index of not less than 105 corresponds to good abrasion resistance.

$$(\text{Abrasion resistance index}) = (\text{the mileage at which the groove depth was reduced by 1 mm in each formulation}) / (\text{the mileage at which the groove depth was reduced by 1 mm in the tire of the reference comparative example}) \times 100$$

(Processability)

The Mooney viscosity ($ML_{1+4}$/130°C) of each unvulcanized rubber composition was determined in accordance with JIS K 6300-1 "Rubber, unvulcanized - Physical property - Part 1: Determination of Mooney viscosity and pre-vulcanization characteristics with Mooney viscometer". Here, a Mooney viscosity tester was preheated for one minute up to 130°C and a small rotor was rotated under this temperature condition. After four-minute rotation, the Mooney viscosity was measured. The Mooney viscosity result of each formulation is expressed as an index relative to that of Comparative Example 1 (=100), using the following equation. A higher index indicates a lower viscosity, that is, a higher level of processability.

$$(\text{Mooney viscosity index}) = (\text{Mooney viscosity of Comparative Example 1}) / (\text{Mooney viscosity of each formulation}) \times 100$$

[Table 1]

| | | Com. Ex. 1 | Com. Ex. 2 | Com. Ex. 3 | Com. Ex. 4 | Ex. 1 | Ex. 2 | Ex. 3 | Com. Ex. 5 | Com. Ex. 6 | Ex. 4 | Ex. 5 | Ex. 6 | Com. Ex. 7 | Com. Ex. 8 | Ex. 7 | Ex. 8 | Ex. 9 | Com. Ex. 9 | Com. Ex. 10 | Ex. 10 |
|---|---|---|---|---|---|---|---|---|---|---|---|---|---|---|---|---|---|---|---|---|---|
| Formulation amounts (part(s) by mass) | Diene polymer 1 | – | – | – | 100 | 100 | 100 | 100 | 100 | 80 | 80 | 80 | 80 | 80 | 80 | 80 | 80 | 80 | 80 | – | – |
| | Diene polymer 2 | – | – | – | – | – | – | – | – | – | – | – | – | – | – | – | – | – | – | – | 100 |
| | SBR | 100 | 80 | 80 | – | – | – | – | – | – | – | – | – | – | – | – | – | – | – | 100 | – |
| | BR | – | 20 | – | – | – | – | – | – | 20 | 20 | 20 | 20 | 20 | – | – | – | – | – | – | – |
| | NR | – | – | 20 | – | – | – | – | – | – | – | – | – | – | 20 | 20 | 20 | 20 | 20 | – | – |
| | Silica | 75 | 75 | 75 | 75 | 75 | 75 | 75 | 75 | 75 | 75 | 75 | 75 | 75 | 75 | 75 | 75 | 75 | 75 | 75 | 75 |
| | Carbon black | 10 | 10 | 10 | 10 | 10 | 10 | 10 | 10 | 10 | 10 | 10 | 10 | 10 | 10 | 10 | 10 | 10 | 10 | 10 | 10 |
| | Silane coupling agent | 6 | 6 | 6 | 6 | 6 | 6 | 6 | 6 | 6 | 6 | 6 | 6 | 6 | 6 | 6 | 6 | 6 | 6 | 6 | 6 |
| | Zinc oxide | 3 | 3 | 3 | 3 | 3 | 3 | 3 | 3 | 3 | 3 | 3 | 3 | 3 | 3 | 3 | 3 | 3 | 3 | 3 | 3 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 | 2 | 2 | 2 | 2 | 2 |
| | Aromatic oil | 20 | 20 | 20 | 20 | 20 | 20 | 20 | 20 | 20 | 20 | 20 | 20 | 20 | 20 | 20 | 20 | 20 | 20 | 20 | 20 |
| | Sulfur | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Compound (A) | 3 | 3 | 3 | – | 0.1 | 3 | 10 | 15 | – | 0.1 | 3 | 10 | 15 | – | 0.1 | 3 | 10 | 15 | – | 0.1 |
| | Vulcanization accelerator (1) | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| | Vulcanization accelerator (2) | 1 | 1 | 1 | 1 | 1 | 1 | 1 | 1 | 1 | 1 | 1 | 1 | 1 | 1 | 1 | 1 | 1 | 1 | 1 | 1 |
| Evaluation results | Fuel economy | 100 | 105 | 103 | 105 | 108 | 115 | 110 | 108 | 110 | 113 | 120 | 115 | 113 | 108 | 111 | 118 | 113 | 111 | 90 | 110 |
| | Wet grip performance | 100 | 95 | 98 | 109 | 110 | 115 | 112 | 109 | 104 | 105 | 110 | 107 | 104 | 102 | 106 | 113 | 112 | 113 | 94 | 112 |
| | Abrasion resistance | 100 | 105 | 101 | 104 | 105 | 110 | 108 | 103 | 109 | 110 | 115 | 113 | 108 | 105 | 106 | 111 | 109 | 104 | 94 | 106 |
| | Processability | 100 | 95 | 105 | 95 | 105 | 115 | 120 | 125 | 90 | 100 | 110 | 115 | 120 | 105 | 115 | 125 | 130 | 135 | 80 | 101 |

As shown in Table 1, fuel economy, wet grip performance, abrasion resistance, and processability were improved in examples in which a specific diene polymer that has been modified, silica, and a specific amount of a compound represented by the formula (I) (a polyoxyalkylene glycol having three branches) were used in combination.

## Claims

1. A rubber composition for a tire, comprising:

    a diene polymer;
    silica; and
    a compound represented by formula (I) below,
    the diene polymer being a modified diene polymer obtained by reacting a component (A) with a component (B),
    an amount of the compound represented by the formula (I) being 0.1 to 10 parts by mass per 100 parts by mass of a rubber component of the rubber composition,
    the component (A) being an active alkali metal-terminated conjugated diene polymer obtained by polymerizing a conjugated diene monomer alone or with an aromatic vinyl monomer, in the presence of a component (C),
    the component (B) being a modifying agent containing a functional group, and
    the component (C) being a chemical species obtained by reacting an organic alkali metal compound with a compound represented by the following formula (1):

    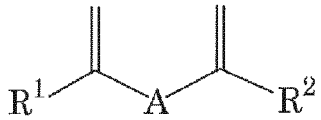

    (1)

    wherein $R^1$ and $R^2$ are the same as or different from each other and each represents a hydrogen atom, a branched or unbranched alkyl group, a branched or unbranched aryl group, a branched or unbranched alkoxy group, a branched or unbranched silyloxy group, a branched or unbranched acetal group, a carboxyl group, a mercapto group, or a derivative thereof; and A represents a branched or unbranched alkylene group, a branched or unbranched arylene group, or a derivative thereof;

    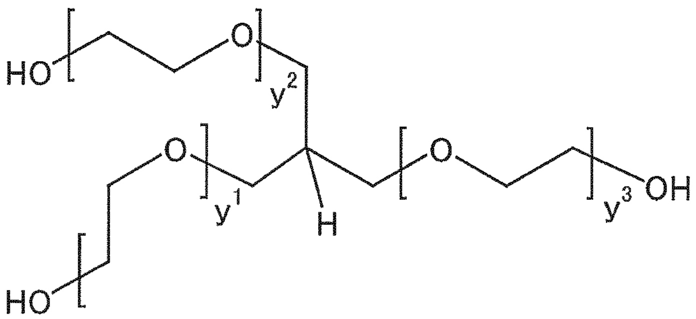

    (I)

    wherein $y^1$, $y^2$, and $y^3$ are the same as or different from each other and each represents an integer of 2 to 40.

2. The rubber composition for a tire according to claim 1,
    wherein the compound represented by the formula (1) is a compound represented by the following formula (2):

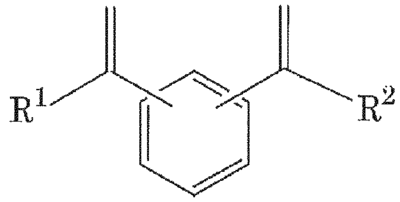

(2)

.

3. The rubber composition for a tire according to claim 1 or 2, wherein the modifying agent is at least one of a compound represented by the following formula (3) and a compound represented by the following formula (4):

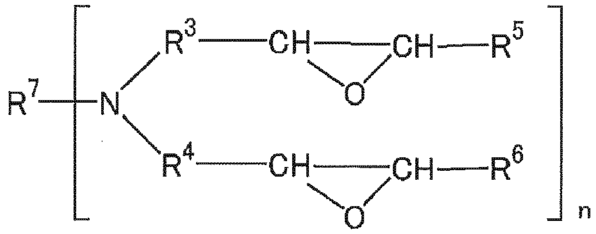

(3)

wherein $R^3$ and $R^4$ are the same as or different from each other and each represents a $C_{1-10}$ hydrocarbon group which may contain at least one selected from the group consisting of an ether group and a tertiary amine group; $R^5$ and $R^6$ are the same as or different from each other and each represents a hydrogen atom or a $C_{1-20}$ hydrocarbon group which may contain at least one selected from the group consisting of an ether group and a tertiary amine group; $R^7$ represents a $C_{1-20}$ hydrocarbon group which may contain at least one selected from the group consisting of an ether group, a tertiary amine group, an epoxy group, a carbonyl group, and a halo group; and n represents an integer of 1 to 6;

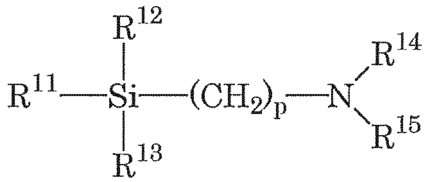

(4)

wherein $R^{11}$, $R^{12}$, and $R^{13}$ are the same as or different from each other and each represents an alkyl group, an alkoxy group, a silyloxy group, an acetal group, a carboxyl group, a mercapto group, or a derivative thereof; $R^{14}$ and $R^{15}$ are the same as or different from each other and each represents a hydrogen atom or an alkyl group; and p represents an integer.

4. The rubber composition for a tire according to any one of claims 1 to 3, wherein the same modifying agent is introduced into both chain ends of the active conjugated diene polymer.

5. The rubber composition for a tire according to any one of claims 1 to 4, wherein an amount of the diene polymer is not less than 5% by mass based on 100% by mass of the rubber component.

6. The rubber composition for a tire according to any one of claims 1 to 5, wherein the conjugated diene monomer is at least one of 1,3-butadiene and isoprene, and the aromatic vinyl monomer is styrene.

7. The rubber composition for a tire according to any one of claims 1 to 6, wherein the modified diene polymer is a modified styrene-butadiene rubber obtained by polymerizing 1,3-butadiene and styrene.

8. The rubber composition for a tire according to any one of claims 1 to 7,

wherein the silica has a nitrogen adsorption specific surface area of 40 to 250 $m^2/g$.

**9.** The rubber composition for a tire according to any one of claims 1 to 8, which is for use as a rubber composition for a tread.

**10.** A pneumatic tire, comprising the rubber composition according to any one of claims 1 to 9.

**INTERNATIONAL SEARCH REPORT**

International application No. PCT/JP2012/067303

A. CLASSIFICATION OF SUBJECT MATTER

*C08L15/00*(2006.01)i, *B60C1/00*(2006.01)i, *C08C19/22*(2006.01)i, *C08K3/36*(2006.01)i, *C08L71/02*(2006.01)i

According to International Patent Classification (IPC) or to both national classification and IPC

B. FIELDS SEARCHED

Minimum documentation searched (classification system followed by classification symbols)
C08L1/00-101/14, C08C19/00-19/44, B60C1/00-19/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-306962 A (Asahi Kasei Chemicals Corp.), 09 November 2006 (09.11.2006), claims; paragraphs [0001] to [0008], [0015] to [0017], [0023] to [0036]; examples (Family: none) | 1-10 |
| Y | JP 2008-150435 A (Toyo Tire and Rubber Co., Ltd.), 03 July 2008 (03.07.2008), claims; paragraphs [0002] to [0006], [0019]; examples (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 July, 2012 (30.07.12) | 18 September, 2012 (18.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2012/067303

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-013540 A (The Yokohama Rubber Co., Ltd.), 21 January 2010 (21.01.2010), claims; paragraphs [0015] to [0018]; examples (Family: none) | 1-10 |
| A | JP 2011-126927 A (Sumitomo Rubber Industries, Ltd.), 30 June 2011 (30.06.2011), claims; examples (Family: none) | 1-10 |
| A | JP 2011-132307 A (Sumitomo Rubber Industries, Ltd.), 07 July 2011 (07.07.2011), claims; examples (Family: none) | 1-10 |
| A | JP 2009-155527 A (The Yokohama Rubber Co., Ltd.), 16 July 2009 (16.07.2009), claims; examples (Family: none) | 1-10 |
| A | JP 2002-179729 A (Bridgestone Corp.), 26 June 2002 (26.06.2002), claims; examples (Family: none) | 1-10 |
| P,A | JP 2011-231303 A (Sumitomo Rubber Industries, Ltd.), 17 November 2011 (17.11.2011), claims; examples & EP 2371580 A1 & CN 102212218 A | 1-10 |
| P,A | JP 2012-097145 A (Sumitomo Rubber Industries, Ltd.), 24 May 2012 (24.05.2012), claims; examples (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002121327 A
- JP 2002338733 A
- JP 2001114938 A
- JP 2010111753 A